# EUROPÄISCHE PATENTSCHRIFT

(11) **EP 1 554 149 B1**
(45) Veröffentlichungstag und Bekanntmachung des Hinweises auf die Patenterteilung: **24.08.2011**
(21) Anmeldenummer: 03775062.7
(22) Anmeldetag: 13.10.2003
(51) Int. Cl.: B60J 7/14

(54) **CABRIOLET-FAHRZEUG**
CONVERTIBLE
CABRIOLET

(30) Priorität: 17.10.2002 DE 10248348; 17.10.2002 DE 10248349; 17.10.2002 DE 10248350
(43) Veröffentlichungstag der Anmeldung: 20.07.2005
(73) Patentinhaber: Wilhelm Karmann GmbH, 49084 Osnabrück (DE)
(72) Erfinder: RUSSKE, Klaus, 49143 Bissendorf (DE); BUNSMANN, Winfried, 49143 Bissendorf (DE); AYDT, Matthias, 71735 Eberdingen (DE)
(74) Vertreter: Kronthaler, Schmidt & Coll.
(86) Internationale Anmeldenummer: PCT/DE2003/003397
(87) Internationale Veröffentlichungsnummer: WO 2004/037585

(56) Entgegenhaltungen:
- EP-A- 1 247 676
- DE-A- 4 100 677
- DE-C- 4 038 074
- US-A- 2 768 025

## Beschreibung

Die Erfindung betrifft ein Cabriolet-Fahrzeug nach dem Oberbegriff des Anspruchs 1 sowie ein zugehöriges Fahrzeugdach.

Aus der DE 44 45 580 C1 ist ein Cabriolet-Fahrzeug bekannt, das gegeneinander einfaltbare feste Dachteile aufweist. Ein hinteres Dachteil umfaßt zwei seitlich aufragende Hauptsäulen und eine dazwischen liegendes Rückfenster. Dem Verlauf der Hauptsäulen folgend, sind pro Fahrzeugseite zwei Gestängeteile angeordnet, ein sog. Lenker und ein Hauptlenker, die sich zwischen einem unterhalb einer Fensterbrüstungslinie gelegenen Hauptlager und einem vorderen Dachteil, das in Schließstellung im wesentlichen horizontal über dem Insassenraum liegt, erstrecken. Lenker und Hauptlenker liegen in Seitenansicht im wesentlichen parallel zueinander und bilden Teile eines Schwenkparallelogramms aus, mit dem die Öffnungs- und Schließbewegung der Dachteile bewirkt werden kann. Der Hauptlenker kann auch durch die Hauptsäule des hinteren Dachteils selbst gebildet sein. Zumindest der parallel hierzu liegende Lenker tritt jedoch in jedem Fall gegenüber dem hinteren Dachteil hervor und schränkt somit die Kopffreiheit im Insassenraum ein - ebenso wie ein oberer Horizontallenker (dort als Führungsteil 15 bezeichnet), der unter dem vorderen Dachteil angeordnet ist und Lenker und Hauptlenker zum Schließen des Parallelogramms miteinander verbindet. Gerade bei zweisitzigen Fahrzeugen, bei denen der Kopf des Fahrers oder Beifahrers im Nahbereich des Übergangs zwischen dem vorderen und dem hinteren Dachteil gehalten sein muß, sind dort angeordnete Gestängeteile besonders störend und im Falle eines Unfalls gefährdend. Es müssen daher den Raum weiter einschränkende zusätzliche Innenverkleidungsteile für diese Gestängeteile vorgesehen sein, die allerdings durch Schlitzausnehmungen oder dergleichen auch einen Durchtritt der Gestängeteile während der Dachbewegung ermöglichen.

Auch die EP 1247676 zeigt eine dergleiche Dachanordnung. Aus der DE40 38 074 C ist ein Cabriolet-Fahrzeug bekannt, das unterhalb eines Dachteils Lenker umfaßt, die mit den Hauptsäulen des Dachteils gelenkig verbunden sind und darüber eine Schwenkbewegung der Hauptsäulen vermitteln können. Diese Lenker benötigen jedoch einen großen eigenen Bewegungsbereich; der Aufbau ist durch die separaten Lenker, die Gelenke zwischen diesen und den Hauptsäulen zusätzlich verkompliziert. Zudem ist die dort gezeigte Ablagegeometrie nur auf ein einteiliges Dach anwendbar.

Der Erfindung liegt das Problem zugrunde, bei einem Cabriolet-Fahrzeug mit mehreren starren

Dachteilen eine optimierte Faltungskinematik zu schaffen.

Die Erfindung löst dieses Problem durch ein Cabriolet-Fahrzeug mit den Merkmalen des Anspruchs 1 sowie durch ein Schwenkdach mit den Merkmalen des Anspruchs 12. Hinsichtlich weiterer vorteilhafter Ausgestaltungen der Erfindung wird auf die abhängigen Ansprüche 2 bis 11 verwiesen.

In der erfindungsgemäßen Ausbildung kann durch den Einsatz des Mittelteils und der Hauptsäulen als Teile eines Schwenkparallelogramms die einfache und blockadefreie Bewegung auch eines mehrteiligen Daches mittels eines Schwenkparallelogramms verwirklicht werden, ohne daß dazu weitere Lenker oder Gelenke nötig wären.

In der Ausbildung nach Anspruch 2 ist durch die einzelne Schwenkanbindung des die Heckscheibe umfassenden Mittelbereichs sowohl an die Fahrzeugkarosserie als auch an den oberen Dachteil sichergestellt, daß der die Heckscheibe umfassende Mittelbereich als Schwenklenker wirken kann und daher die Anzahl zusätzlicher Lenker vermindert werden kann oder diese insbesondere vorteilhaft ganz entbehrlich sind. Dies gilt sowohl für parallel zu den Hauptsäulen erstreckte Lenker als auch für ein oberes Horizontalverbindungsstück. Die Kopffreiheit ist dadurch erhöht, die Verletzungsgefahr vermindert. Insbesondere wenn sowohl die Hauptsäulen als auch der Mittelteil jeweils als Schwenklenker zwischen Karosserie und oberem Dachteil wirken können, ist bereits pro Fahrzeugseite je ein Lenkerpaar gebildet, wodurch eine vorteilhafte Dachablagekinematik auch ohne weitere Lenker verwirklicht werden kann. Durch die einzelne Schwenkbarkeit des Mittelteils einerseits und der seitlichen Hauptsäulen andererseits kann eine Anpassung der Dachablagebewegung an die Platzverhältnisse in der Karosserie erfolgen, da in Ablagestellung die genannten Teile zueinander beabstandet liegen können.

Wenn der Mittelbereich und die Hauptsäulen über ein ihre Schwenkbewegungen synchronisierendes Koppelglied miteinander verbunden sind, ist die Öffnungsbewegung in ihrem verkantungsfreien Ablauf weiter unterstützt.

Sehr vorteilhaft liegt die Heckscheibe im geöffneten Dachzustand oberhalb der seitlichen Hauptsäulen, so daß dadurch unterhalb der Heckscheibe eine Vergrößerung des Aufnahmeraums für Gepäck entsteht.

Eine besonders gute Sicht nach hinten kann dann verwirklicht sein, wenn der Mittelteil im wesentlichen über seine ganze Höhe transparent als Heckscheibe ausgebildet ist.

Das Freiluftgefühl auch bei geschlossenem Dach kann weiter verbessert sein, wenn dem oberen Dachteil ein als Schiebedach wirkender Plattenkörper zugeordnet ist, der zu seiner Öffnung über den hinteren Dachteil verlagerbar ist. Insbesondere kann der Plattenkörper ebenfalls transparent sein.

Weitere Vorteile und Merkmale der Erfindung ergeben sich aus in der Zeichnung dargestellten und nachfolgend beschriebenen Ausführungsbeispielen des Gegenstandes der Erfindung.

In der Zeichnung zeigt:
- Fig. 1: ein erfindungsgemäßes Cabriolet-Fahrzeug in schematischer, unten und vorne abge- brochener Seitenansicht bei geschlosse- nem Dach und geschlossenem Plattenkörper des oberen Dachteils,
- Fig. 2: eine ähnliche Ansicht wie Fig. 1 einer alternativen Ausführung mit einteiligem oberem Dachteil ohne gesondertes Schie- bedach,
- Fig. 3: eine ähnliche Ansicht wie Fig. 1 während der Öffnung des als Schiebedachs wirken- den Plattenkörpers, wobei zusätzlich An- trieb und vorgelegegetriebe für die Be- wegung der Dachteile eingezeichnet sind,
- Fig. 4: eine ähnliche Ansicht wie Fig. 3 in vollständiger Öffnungsstellung des Plat-
- Fig. 5: tenkörpers und ansonsten geschlossenem Dach, das Dach in der schiebedachfreien Aus- führung gemäß Fig. 2 während der Dach- öffnung,
- Fig. 5a: eine ähnliche Ansicht wie Fig. 5, jedoch der Ausführung mit Schiebedach in dessen Offenstellung,
- Fig. 6: eine ähnliche Ansicht wie Fig. 5a bei weiter fortschreitender Dachöffnung,
- Fig. 7: das Dach nach Fig. 6 in vollständig ge- öffneter, im Heckbereich des Fahrzeugs abgelegter Stellung,
- Fig. 8: eine perspektivische Explosionsdarstel- lung des Daches mit im oberen Dachteil vorgesehenem Plattenteil,
- Fig. 9: bis Fig. 12 eine vereinfachte systemati- sche Seitenansicht der für die Dachabla- ge maßgeblichen bewegten Teile ohne Be- rücksichtigung von Antrieben, Getrieben oder eines Schiebedaches, darin

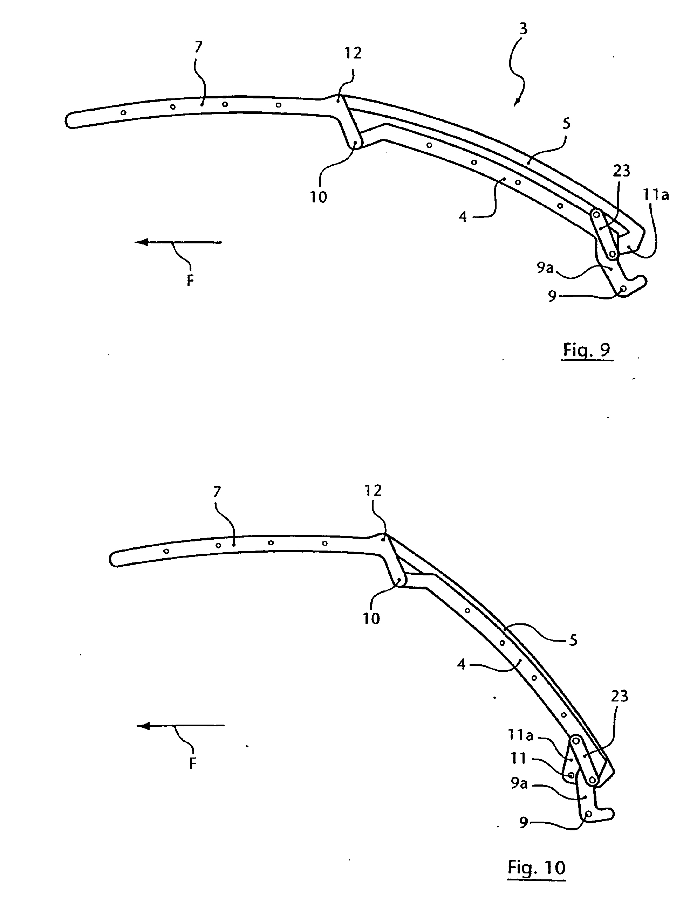

- Fig. 9: die Dachkinematik in geschlossener Dach- stellung,

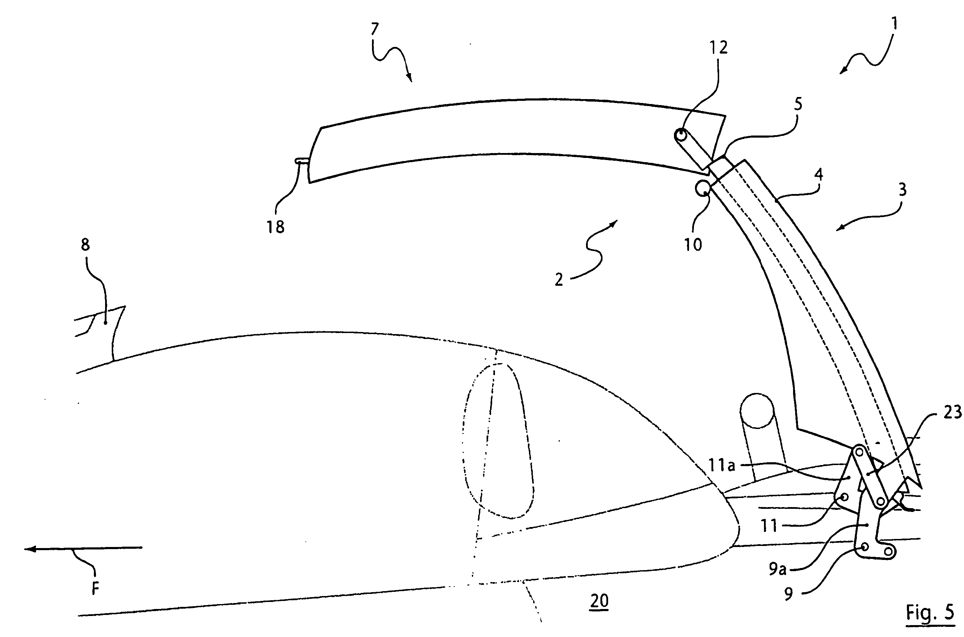

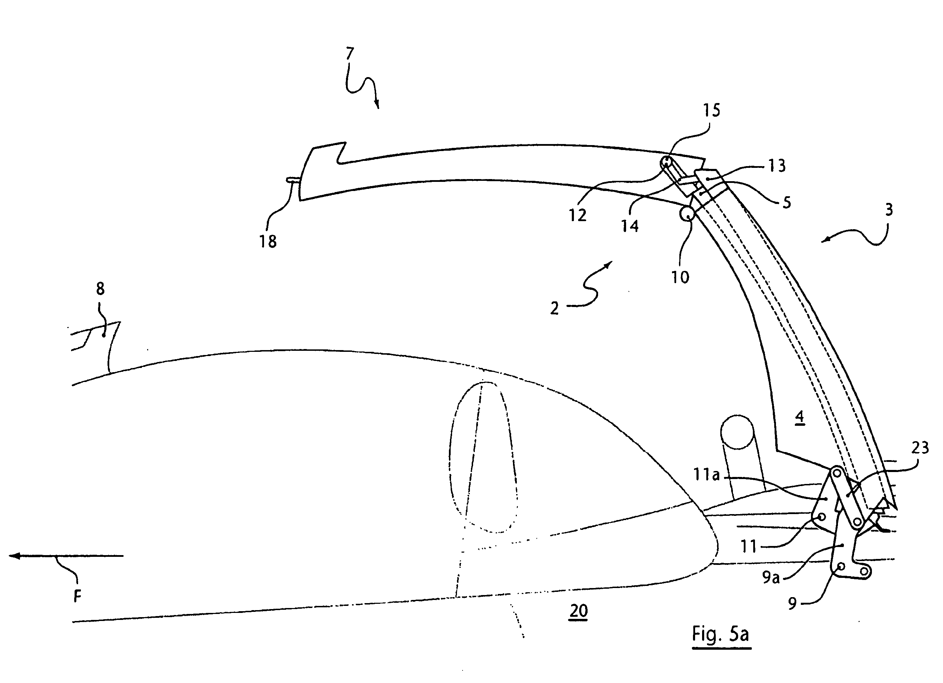

- Fig. 10: die Dachkinematik in der ersten Öff- nungsphase etwa entsprechend der Öff- nungsstellung nach Figur 5,

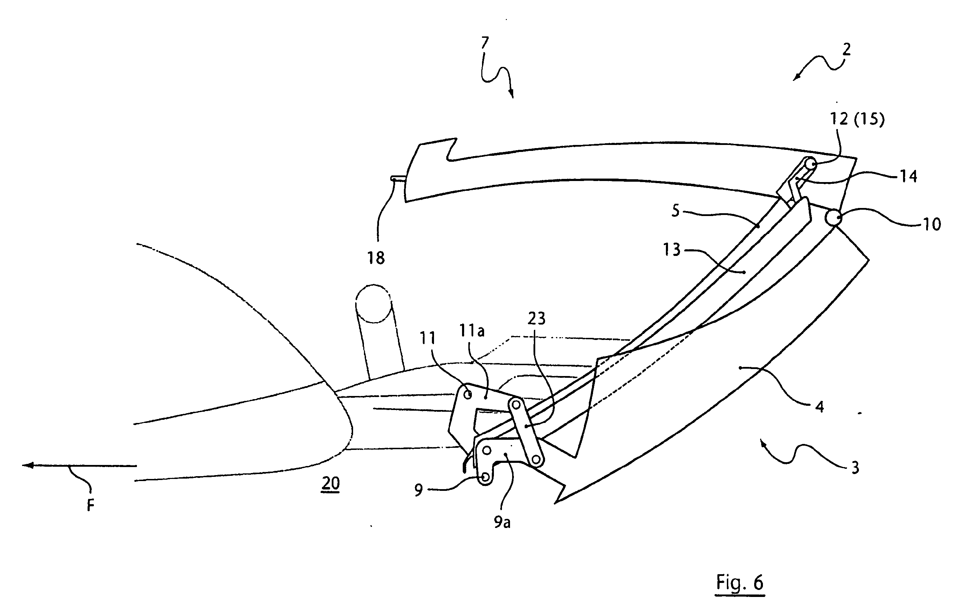

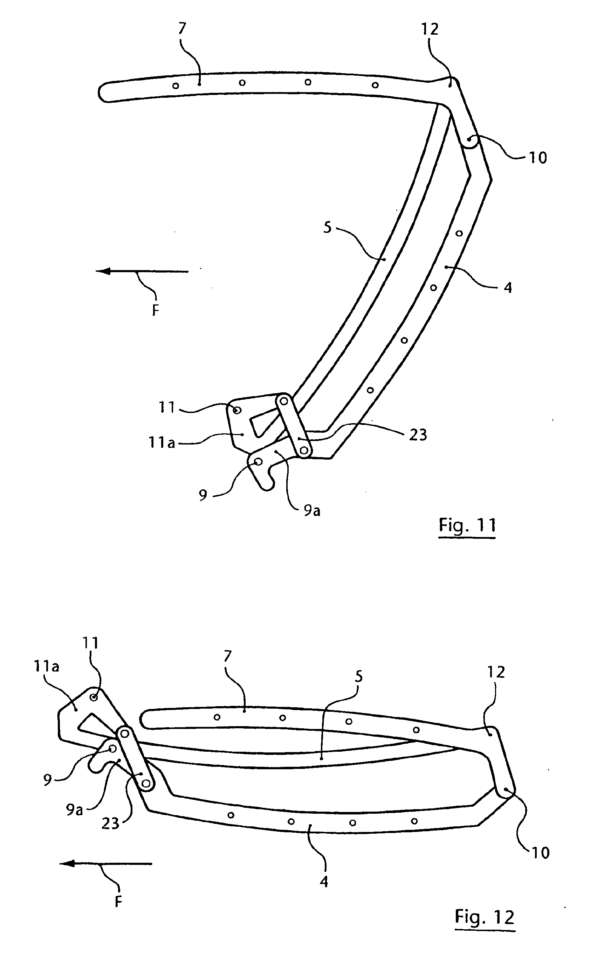

- Fig. 11: die Dachkinematik in Öffnungsstellung etwa entsprechend der Öffnungsstellung nach Figur 6,

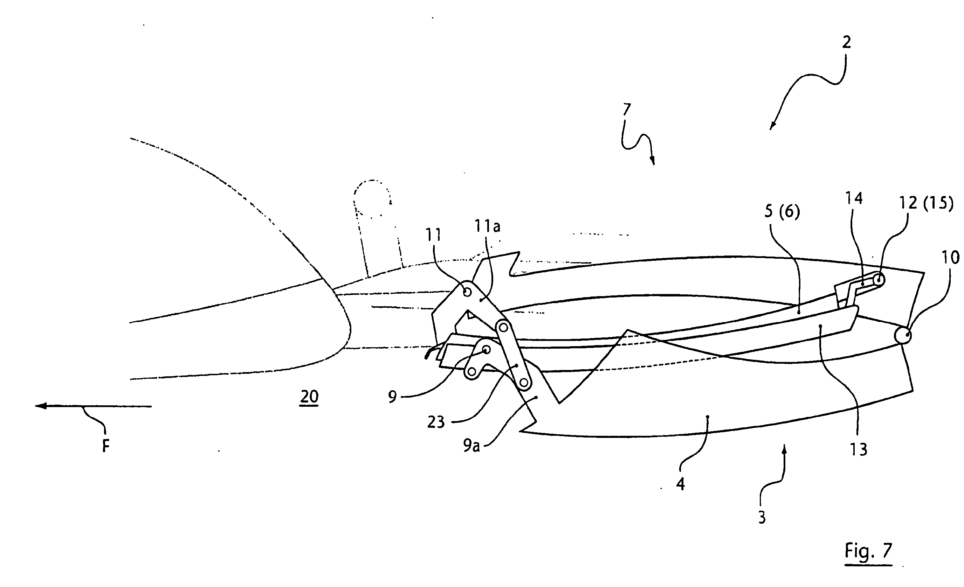

- Fig. 12: die Dachkinematik in vollständig geöff- neter Stellung entsprechend Figur 7,

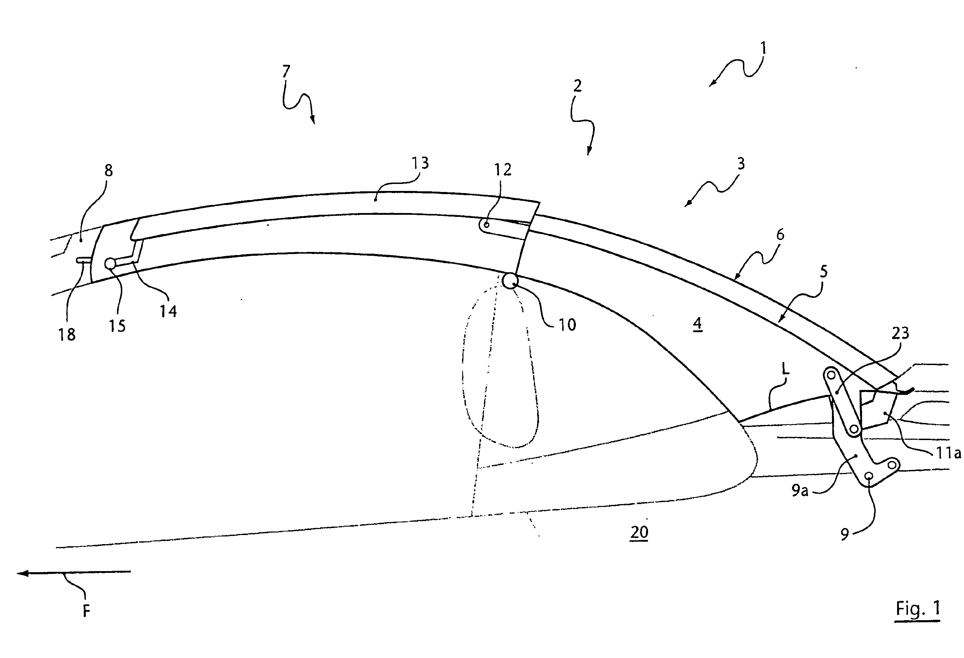

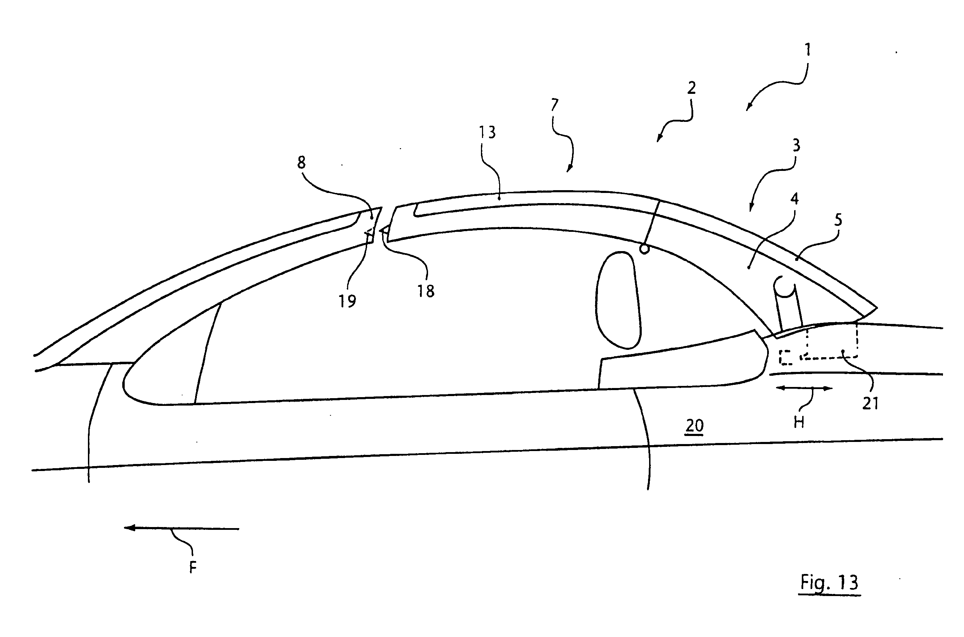

- Fig. 13: eine ähnliche Ansicht wie Fig. 1 mit insgesamt horizontal nach hinten verla- gertem Dach zur Lösung des Eingriffs zwischen dem vorderen Dachende und dem Windschutzscheibenrahmen.

Das dargestellte erfindungsgemäße Cabriolet-Fahrzeug ist ein Zweisitzer. Auch ein Cabriolet-Fahrzeug mit etwa zwei Sitzreihen hintereinander kann erfindungsgemäß ausgebildet sein.

Das Fahrzeug 1 umfaßt ein bewegliches Dach, das insgesamt mit 2 bezeichnet ist und einen bezüglich der Fahrtrichtung F rückwärtigen Dachteil 3 mit zwei seitlichen Hauptsäulen 4 und einem dazwischen befindlichen Mittelbereich 5 umfaßt. Dieser umfaßt eine oder ist im wesentlichen gebildet aus einer flexiblen oder insbesondere starren Heckscheibe 6, die beispielsweise aus Kunststoff oder vorteilhaft Glas bestehen kann. Sowohl die Hauptsäulen 4 als auch der Mittelbereich 5 sind starr und können daher Drehmomente übertragen. Die Hauptsäulen 4 sowie ein eventueller Rahmen 5a des Mittelteils 5 können beispielsweise aus Stahl, einem Leichtmetall, einem metallischen Schaumwerkstoff oder Kunststoff gebildet sein. Es ist auch möglich, daß auch die Hauptsäulen 4 transparent ausgebildet sind. Des weiteren können die Hauptsäulen 4 von Rahmenteilen unterstützt sein.

Weiter umfaßt das Dach 2 ein gegenüber dem Dachteil 3 im geschlossenen Zustand in Fahrtrichtung F vorgeordnetes oberes Dachteil 7. Dieses ist im Ausführungsbeispiel mit einem zweisitzigen Fahrzeug 1 von einem Plattenteil ohne weitere Querteilung gebildet. Im geschlossenen Zustand stützt sich dieses unmittelbar oder mittelbar am Windschutzscheibenrahmen 8 ab. Es kann wie die Hauptsäulen 4 aus unterschiedlichen Materialien gebildet sein.

Die Hauptsäulen 4 sind in ihrem unteren Bereich über Ausleger 9a gegenüber der Karosserie 20 an zumindest während des Verschwenkens karosseriefesten Schwenklagern 9 gehalten. Deren Lagerachsen liegen horizontal und quer zum Fahrzeug 1. Im oberen Bereich sind die Hauptsäulen 4 an Schwenkgelenken 10, die ebenfalls horizontale und quer zum Fahrzeug 1 erstreckte Lagerachsen aufweisen, mit dem oberen Dachteil 7 verbunden, das oberhalb eines Insassenraums gelegen ist. Um die Achse der Schwenkgelenke 10 falten die Dachteile 3 und 7 bei der Dachöffnung gegeneinander ein.

Der Mittelbereich 5 ist in seinem unteren Bereich über Ausleger 11a gegenüber der Karosserie 20 an einem oder mehreren zumindest während des Verschwenkens karosseriefesten Schwenklager(n) 11 gehalten. Deren Lagerachsen liegen horizontal und quer zum Fahrzeug 1. Im oberen Bereich ist der Mittelteil 5 an zumindest einem Schwenkgelenk 12, das ebenfalls eine horizontale und quer zum Fahrzeug 1 erstreckte Lagerachse aufweist, mit dem oberen Dachteil 7 verbunden. Hier sind zwei Schwenkgelenke 12, die den jeweiligen Fahrzeugseiten zugeordnet sind, vorgesehen.

Die Schwenkgelenke 11 und 12 des Mittelteils 5 liegen jeweils in Ebenen oberhalb der jeweiligen Ebene der Schwenkgelenke 9 und 10 der seitlichen Hauptsäulen 4. Wie unten noch näher erläutert ist, können die Schwenklager 9 und 11 optional zwar während des Verschwenkens karosseriefest, jedoch zwischen einer geschlossenen Dachstellung (Fig. 1) und einer zum Schwenken geeigneten hinteren Extremalstellung (Fig. 13) horizontal oder nahezu horizontal verschieblich sein.

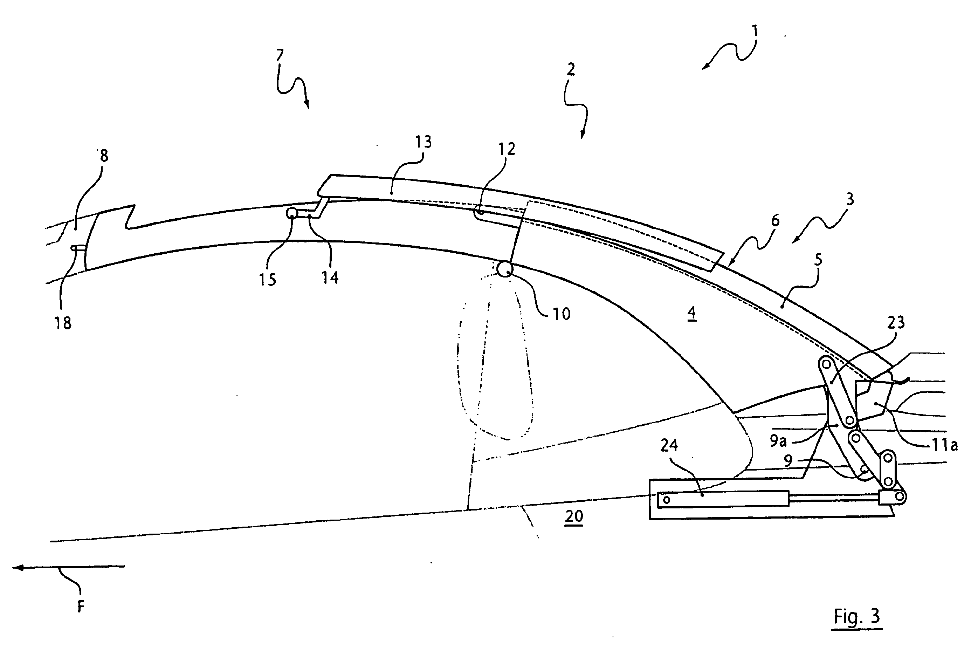

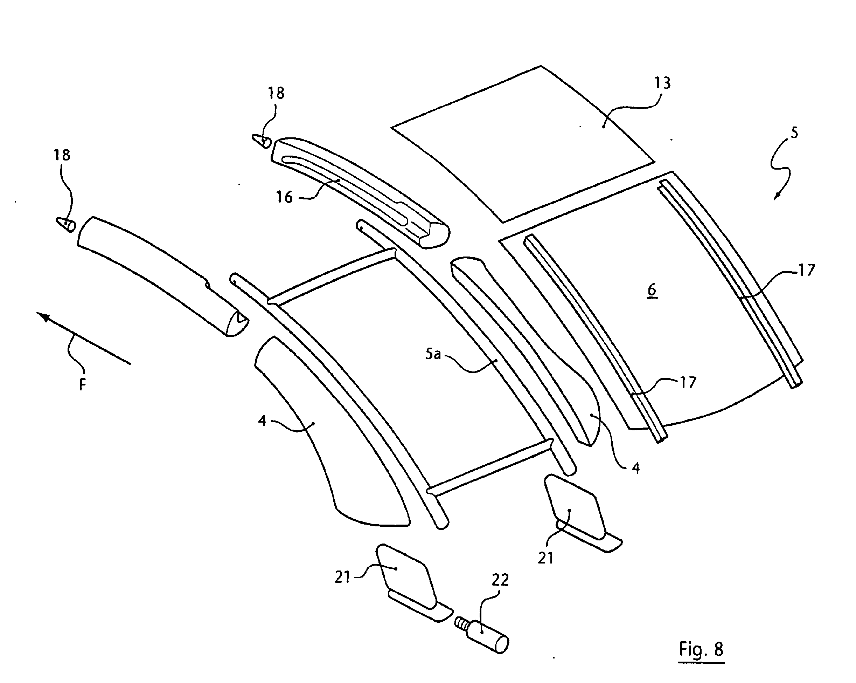

Als weitere Option umfaßt das vordere Dachteil 7 in einem dargestellten Ausführungsbeispiel zusätzlich einen verschiebbaren Plattenkörper 13, der nach Art eines Schiebedachs zu öffnen und hierbei über den rückwärtigen Dachteil 3 zu verlagern ist (Fig. 3, 4, 5a, 6, 7, 8). Der Plattenkörper 13 ist aus einem transparenten Kunststoff oder Glas gebildet, so daß er auch bei Verlagerung über die Heckscheibe 6 die Sicht nach hinten nicht gefährdet. Er weist seitliche Ausleger 14 auf, die über Achsstummel 15 oder dergleichen Führungselemente in seitlichen Führungsbahnen 16 des oberen Dachteils 7 eingreifen. Des weiteren sind am Mittelteil 5 des hinteren Dachteils 3 Führungsschienen 17 vorgesehen (Fig. 8), die den Plattenkörper 13 in eine Parallellage zur Heckscheibe 6 führen und dort halten können. In geschlossener Stellung greift der Plattenkörper 13 sowohl über die im vorderen Bereich angeordneten Ausleger 14 in die Führungsbahnen 16 als auch über weitere Ausleger (nicht eingezeichnet) in die hinteren Führungsschienen 17 ein. Ein Öffnen des Daches 2 ist daher erst bei geöffnetem Schiebedach 13 möglich.

Auch in maximal nach hinten verlagerter Öffnungsstellung des als Schiebedachs wirkenden Plattenkörpers 13 ist dieser in den Führungsschienen 17 des hinteren Dachteils 3 und über seine Ausleger 14 auch noch in den Führungsbahnen 16 des oberen Dachteils 7 gehalten. Der Endpunkt der Führungsbahnen 16 liegt auf der Schwenkachse des oberen Schwenkgelenks 12, mit dem das Mittelteil 5 an dem oberen Dachteil 7 angreift, wodurch das Dach 2 mit geöffnetem Schiebedach 13 geöffnet und geschlossen werden kann (sh. z. B. Fig. 5a). Eine Programmsteuerung kann vorgesehen sein, über die sichergestellt ist, daß das Dach 2 nur bei vollständig geöffnetem Schiebedach 13 geöffnet oder geschlossen werden kann. Dadurch, daß das Schiebedach 13 sowohl mit seinen vorderen als auch seinen hinteren Auslegern in der jeweiligen Führung 16, 17 verbleibt, muß beim Öffnen des Schiebedachs 13 keine Stufe überwunden werden. Der Bewegungsablauf ist daher besonders glatt und auch nach längerer Fahrzeuglebensdauer zuverlässig durchzuführen.

Alternativ wäre auch möglich, daß der Plattenkörper 13 im geschlossenem Zustand nur an dem oberen Dachteil 7 gehalten ist und im geöffneten Zustand vollständig an den hinteren Dachteil 3 übergeben ist. Dann wäre eine Dachöffnung sowohl bei vollständig geöffnetem als auch bei vollständig geschlossenem Schiebedach 13 möglich.

Der Mittelbereich 5 ist im Ausführungsbeispiel durch einen Tragrahmen 5a und ein darauf befestigtes transparentes Plattenteil, das als Heckscheibe 6 dient, gebildet. Dieses kann ggf. die Führungsschienen 17 für das Schiebedach 13 tragen. Auch viele andere Konstruktionen, etwa auch mit einem Rahmen, in dessen Mitte die Heckscheibe gelegen ist, oder mit direkt an eine Heckscheibe angeschweißten Auslegern 11a, sind möglich.

Zur Festlegung des vorderen Dachteils 7 am Windschutzscheibenrahmen 8 sind dem Dachteil 7 in etwa in dessen Erstreckungsebene gelegene und im geschlossenen Zustand in Fahrtrichtung F weisende Zapfen 18 zugeordnet, die in komplementäre Ausnehmungen 19 des Windschutzscheiben-rahmens 8 eingreifen können. Die Zapfen 18 können ebenso wie die Ausnehmungen 19 konisch ausgebildet sein, um dadurch eine Zentrierung des schließenden Daches 2 zu erleichtern. Eine zusätzliche Sicherung ist bei Vorsehen einer Sicherung des im nächsten Absatz erläuterten verschiebbaren Hauptlagers 21 nicht zwingend erforderlich.

Die karosseriefesten Schwenklager 9, 11 für die Teile 4, 5 sind in der oben erwähnten optionalen Ausbildung insgesamt in einem gegenüber der Karosserie 20 horizontal oder nahezu horizontal in Fahrzeuglängsrichtung verschieblichen seitlichen Hauptlager 21 angeordnet. Jedem dieser Hauptlager 21 ist ein Antrieb 22 zugeordnet, etwa ein Hydraulikzylinder, eine Spindel, ein Elektromotor oder ähnliches. Über diesen ist das jeweilige Hauptlager 21 - und damit das an diesem gehaltene Dach 2 - horizontal in Richtung des Pfeils H beweglich (Übergang von Fig. 1 zu Fig. 13) zwischen einer vorderen Extremalstellung bei vollständig geschlossenem Dach und einer hinteren Extremalstellung (Fig. 13), in der das Dach 2 so weit entgegen der Fahrtrichtung verlagert ist, daß die Zapfen 18 außer Eingriff mit den Ausnehmungen 19 des windschutzscheibenrahmens 8 gelangt sind. In dieser Stellung ist das Dach 2 frei um die Lager 21 schwenkbar, ohne daß Kollisionsgefahr der Dachspitze mit dem Windschutzscheibenrahmen 8 bestünde.

Der Weg H zwischen der vorderen und hinteren Extremalstellung des Antriebs 22 ist dabei über einen eventuell einstellbaren hinteren Anschlag derart auf wenige Zentimeter begrenzt, daß in der hinteren Extremalstellung des Daches 2 die Zapfen 18 gerade so weit außer Eingriff mit dem Windschutzscheibenrahmen 8 gelangt sind, daß das Schwenken stattfinden kann. Ein zu weites rückwärtiges Verlagern würde hingegen den Öffnungs- oder Schließvorgang unnötig verzögern.

Die Dachteile 3, 7 sind für ihre Bewegung um die seitlich in der Karosserie 20 angeordneten Hauptlager 21 über ein Kopplungsglied 23 miteinander gekoppelt. Dieses erstreckt sich zwischen Auslegern 9a und 11a, die das jeweilige Schwenklager 9 mit einer Hauptsäule 4 bzw. das Schwenklager 11 mit dem Mittelereich 5 verbinden. Es genügt daher ein Antrieb 24 pro Fahrzeugseite (Fig. 3), um eine gleichmäßige Schwenkbewegung um die Lager 9 und 11 zu bewirken.

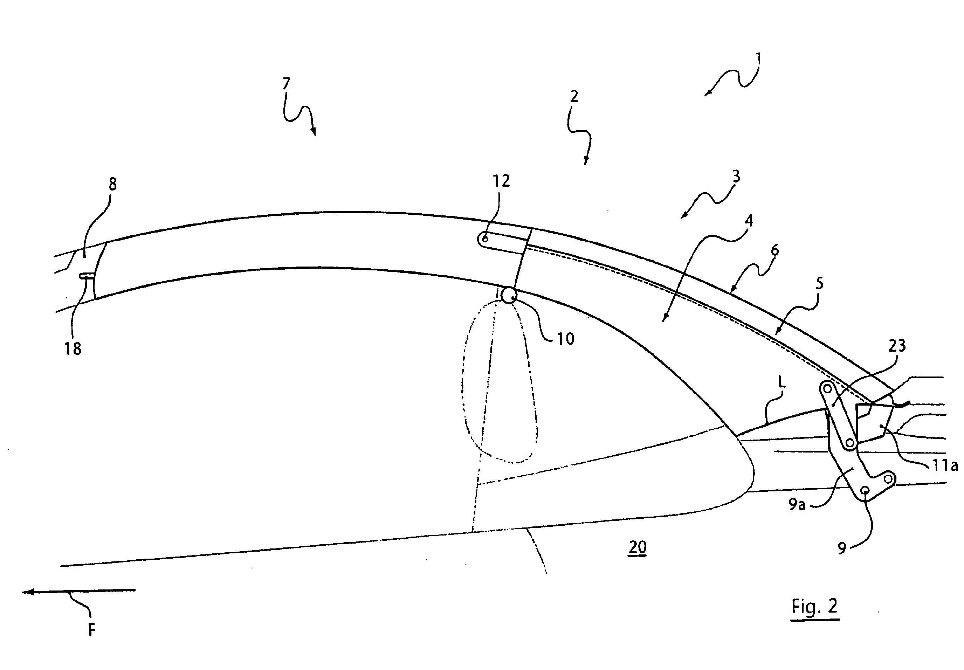

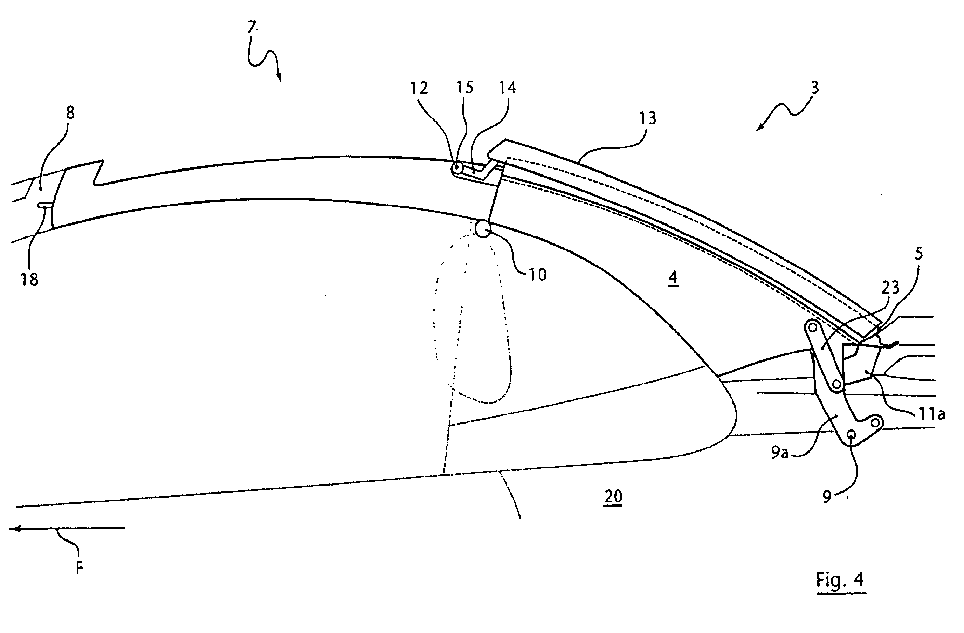

Zur Öffnung des Daches 2 aus der geschlossenen Stellung (Fig. 1 für eine Version mit Schiebedach 13 bzw. Fig. 2 für ein Fahrzeug ohne Schiebedach) in eine vollständig geöffnete Stellung (Fig. 7) werden - ohne die Option des insgesamt verschieblichen Daches 2 - zunächst durch Kraft des Antriebs 24 (Fig. 3) die Ausleger 9a und 11a gleichzeitig um die jeweiligen karosseriefesten Lager 9, 11 heckwärts verschwenkt (Fig. 5 bis Fig. 7, wobei in Fig. 5 ein Dach 2 ohne Schiebedach 13 dargestellt ist). In der Version mit Schiebedach 13 muß dieses während der Öffnung des Daches 2 vollständig geöffnet sein. Im hier gezeigten Beispiel wird vor Dachöffnung zunächst das Schiebedach 13 über Führung der Ausleger 14 in den Führungsbahnen 16 und Weiterführung des Plattenkörpers 13 in den Führungsschienen 17 des hinteren Dachteils 3 derart geöffnet, daß in seiner vollständig geöffneten Stellung die Achsstummel 15 koaxial mit der Schwenkachse des Schwenkgelenks 12 liegen (Fig. 4 ff.). Dabei sind die Achsstummel 15 weiter in den Führungsbahnen 16 gehalten, sie müssen somit beim Aufschieben des Schiebedachs 13 weder eine Stufe noch einen Versatz überwinden. Da der Mittelbereich 5 und das Dachteil 7 am Gelenk 12 gegeneinander einschwenken, kann während dieses Einschwenkens der Plattenkörper 13 unbewegt parallel zu der dem Mittelbereich 5 zugehörigen Heckscheibe 6 gehalten sein und dennoch mit den Auslegern 14 in den Führungsbahnen 16 des vorderen Dachteils 7 verbleiben.

Während des Aufschwenkens der Dachteile 3 und 7 durchläuft aufgrund des Höhenversatzes der Ebenen der Gelenke 9 und 10 einerseits und 11 und 12 andererseits der Mittelbereich 5 die Erstreckungsebene der Hauptsäulen 4. Die Langseiten des Gelenkparallelogramms, gebildet aus den Hauptsäulen 4 und dem Mittelbereich 5, falten gegeneinander durch, so daß am Ende die Parallelogrammorientierung gewechselt hat. Dadurch gelangt der Mittelbereich 5 in eine oberhalb der Hauptsäulen 4 liegende Ablagestellung in der Karosserie 20 (Fig. 7). Dies ist sehr vorteilhaft, weil dadurch unter dem Mittelbereich 5 mit der Heckscheibe 6 zusätzlicher Stauraum entsteht.

Mit der Option einer Horizontalverlagerung des gesamten Daches 2 würde zunächst dieses vor Einleitung der Aufschwenkbewegung nach hinten verschoben (Fig. 13) und nach vollständiger Dachöffnung wieder nach vorne verschoben werden können.

Das Durchfalten des Parallelogramms ist in den Figuren 9 bis 12 in schematischer Übersicht noch einmal hervorgehoben. Die dort gezeigten im wesentlichen stangenförmigen Teile sind zur Vereinfachung mit den Bezugszeichen 4, 5 und 7 für die jeweiligen Gesamtteile versehen worden, da es für den Bewegungsablauf nicht darauf ankommt, wie irgendwelche unterstützenden Rahmenteile für die genannten Einheiten 4, 5, 7 ausgebildet sind. Ebenso spielt für den hier dargestellten prinzipiellen Ablauf ein eventuelles Schiebedach 13 keine Rolle. Wie aus der Zeichnung sichtbar ist, sind zusätzliche Lenker außerhalb der Teile 4, 5 nicht erforderlich. Das Parallelogramm ist über das die Schwenkgelenke 10 und 12 verbindende Dachteil 7 geschlossen, ohne daß hier ein gesondertes Bauteil erforderlich wäre. Die Kopffreiheit bleibt daher uneingeschränkt. Mit dem Durchschwenken des Parallelogramms ist einerseits eine gedichtete Anlage zwischen dem Mittelbereich 5 und den Hauptsäulen 4 bei geschlossenem Dach 2 und andererseits die Halterung des Mittelbereichs 5 in einer erhöhten Ebene zur Vergrößerung des Gepäckraums erreicht.

Die Erfindung ist sowohl bei Fahrzeugen mit manuell zu bewegenden Dächern auch bei voll- oder teilautomatischer Beweglichkeit des Daches 2 anwendbar. Es ist auch möglich, daß lediglich für die Horizontalverschiebung H Antriebe vorgesehen sind und das eigentliche Ein- oder Ausfalten des Daches 2 manuell erfolgt.

## Patentansprüche

1. Cabriolet-Fahrzeug (1) mit einem hinteren Dachteil (3), der sich zumindest zwischen einer Fensterbrüstungslinie (L) und einem oberhalb eines Insassenraums liegenden Dachteil (7) erstreckt und der eine im geschlossenen Dachzustand zwischen seitlichen Hauptsäulen (4) liegenden, eine Heckscheibe (6) umfassenden Mittelbereich (5) umfaßt, wobei das Dach (2) mittels eines dem hinteren Dachteil (3) zugeordneten Schwenkparallelogramms beweglich ist,
**dadurch gekennzeichnet,**
**daß** die Hauptsäulen (4) einerseits und der Mittelbereich (5) andererseits Teile des Schwenkparallelogramms bilden.

2. Cabriolet-Fahrzeug (1) nach Anspruch 1,
**dadurch gekennzeichnet,**
**daß** die Hauptsäulen (4) einerseits und der Mittelbereich (5) andererseits jeweils für sich sowohl mit der Fahrzeugkarosserie (20) als auch mit dem oberen Dachteil (7) schwenkbeweglich verbunden sind.

3. Cabriolet-Fahrzeug nach einem der Ansprüche 1 oder 2,
**dadurch gekennzeichnet,**
**daß** das Dach (2) frei von einer vor einer Hauptsäule (4) liegenden Führungsstange ist.

4. Cabriolet-Fahrzeug nach einem der Ansprüche 1 bis 3,
**dadurch gekennzeichnet,**
**daß** das Dach (2) genau ein starres oberes Dachteil (7) umfaßt.

5. Cabriolet-Fahrzeug nach einem der Ansprüche 1 bis 4,
**dadurch gekennzeichnet,**
**daß** der Mittelbereich (5) und die Hauptsäulen (4) über ein ihre Schwenkbewegungen synchronisierendes Koppelglied (23) miteinander verbunden sind.

6. Cabriolet-Fahrzeug nach Anspruch 5,
**dadurch gekennzeichnet,**
**daß** die Anlenkung (11) des Mittelbereichs (5) an der Karosserie (20) und die Anlenkung des Mittelbereichs (5) an dem oberen Dachteil (7) jeweils oberhalb der Ebenen der jeweiligen Anlenkung (9;10) der Hauptsäule (4) gelegen ist.

7. Cabriolet-Fahrzeug nach Anspruch 6,
**dadurch gekennzeichnet,**
**daß** im geöffneten Zustand die Heckscheibe (6) oberhalb der Hauptsäulen (4) gehalten ist.

8. Cabriolet-Fahrzeug nach einem der Ansprüche 1 bis 7,
**dadurch gekennzeichnet,**
**daß** der Mittelbereich (5) im wesentlichen über seine ganze Höhe als Heckscheibe (6) ausgebildet ist.

9. Cabriolet-Fahrzeug nach einem der Ansprüche 1 bis 8,
**dadurch gekennzeichnet,**
**daß** dem oberen Dachteil (7) ein Plattenkörper (13) zugeordnet ist, der in seitlichen Führungen (16;17) längsverschieblich gehalten ist.

10. Cabriolet-Fahrzeug nach Anspruch 9,
**dadurch gekennzeichnet,**
**daß** der hintere Dachteil (3) seitliche Führungen (17) für den Plattenkörper (13) aufweist, die an Führungen (16) des oberen Dachteils (7) anschließen und daß der Plattenkörper (13) sowohl in Führungen (16) des vorderen (7) als auch in Führungen (17) des hinteren Dachteils (3) eingreift.

11. Cabriolet-Fahrzeug nach einem der Ansprüche 1 bis 10,
**dadurch gekennzeichnet,**
**daß** das Dach (2) zwischen einer geschlossenen Stellung, in der das obere Dachteil (7) mittelbar oder unmittelbar an einem Windschutzscheibenrahmen (8) gehalten ist, und einer Zwischenstellung, in der die Halterung zwischen dem Dach (2) und dem Windschutzscheibenrahmen (8) gelöst ist, zumindest nahezu horizontal verlagerbar ist.

12. Schwenkdach (2) mit einem hinteren Dachteil (3), der sich in einer an einer Fahrzeugkarosserie montierten Stellung zumindest zwischen einer Fensterbrüstungslinie (L) und einem dann oberhalb eines Insassenraums liegenden Dachteil (7) erstreckt und der eine im geschlossenen Dachzustand zwischen seitlichen Hauptsäulen (4) liegenden, eine Heckscheibe (6) umfassenden Mittelbereich (5) umfaßt, wobei das Dach (2) mittels eines dem hinteren Dachteil (3) zugeordneten Schwenkparallelogramms beweglich ist und wobei die Hauptsäulen (4) einerseits und der Mittelbereich (5) andererseits Teile des Schwenkparallelogramms bilden.

## Claims

1. A convertible vehicle (1) comprising a rear roof part (3), which extends at least between a window-sill line (L) and a roof part (7) located above a passenger compartment and which comprises a central region (5), located between lateral main pillars (4) when the roof is closed and comprising a rear window (6), the roof (2) being movable by means of a pivoting parallelogram assigned to the rear roof part (3),
**characterised in that**
the main pillars (4) on the one hand and the central region (5) on the other hand form parts of the pivoting parallelogram.

2. The convertible vehicle (1) according to claim 1, **characterised in that** the main pillars (4) on the one hand and the central region (5) on the other hand are each independently articulated to the vehicle body (20) and to the upper roof part (7).

3. The convertible vehicle according to any one of claims 1 or 2, **characterised in that** the roof (2) is free from a guide rod located in front of a main pillar (4).

4. The convertible vehicle according to any one of claims 1 to 3, **characterised in that** the roof (2) comprises exactly one rigid upper roof part (7).

5. The convertible vehicle according to any one of claims 1 to 4, **characterised in that** the central region (5) and the main pillars (4) are connected to each other via a coupling member (23) synchronising their pivoting movements.

6. The convertible vehicle according to claim 5, **characterised in that** the articulation (11) of the central region (5) to the vehicle body (20) and the articulation of the central region (5) to the upper roof part (7) are each located above the planes of the respective articulations (9; 10) of the main pillar (4).

7. The convertible vehicle according to claim 6, **characterised in that** the rear window (6) is held above the main pillars (4) in its opened state.

8. The convertible vehicle according to any one of claims 1 to 7, **characterised in that** the central region (5) is provided substantially over its entire height as a rear window (6).

9. The convertible vehicle according to any one of claims 1 to 8, **characterised in that** a plate body (13), held longitudinally displaceable in lateral guides (16; 17), is assigned to the upper roof part (7).

10. The convertible vehicle according to claim 9, **characterised in that** the rear roof part (3) comprises lateral guides (17) for the plate body (13), which adjoin guides (16) of the upper roof part (7), and that the plate body (13) is in engagement both with guides (16) of the front roof part (7) and guides (17) of the rear roof part (3).

11. The convertible vehicle according to any one of claims 1 to 10, **characterised in that** the roof (2) is displaceable at least nearly horizontally between a closed position, in which the upper roof part (7) is fixed indirectly or directly to a windscreen frame (8), and an intermediate position, in which the fixation between the roof (2) and the windscreen frame (8) is released.

12. A pivoting roof (2) comprising a rear roof part (3) which, in a position mounted to a vehicle body, extends at least between a window-sill line (L) and a roof part (7), which is then located above a passenger compartment, and which comprises a central region (5), located between lateral main pillars (4) when the roof is closed and comprising a rear window (6), the roof (2) being movable by a pivoting parallelogram assigned to the rear roof part (3), with the main pillars (4) on the one hand and the central region (5) on the other hand forming parts of the pivoting parallelogram.

## Revendications

1. Véhicule cabriolet (1) comprenant un élément de toit arrière (3), s'étendant au moins entre une ligne de parapet de fenêtre (L) et un élément de toit (7) disposé au-dessus d'un habitacle et comprenant une région centrale (5), cette région centrale (5) étant disposée entre des montants principaux latéraux (4) lorsque le toit est fermé et comprenant une lunette arrière (6), le toit (2) étant déplaçable au moyen d'un parallélogramme articulé qui est associé à l'élément de toit arrière (3),
**caractérisé en ce que**
les montants principaux (4) d'une part et la région centrale (5) d'autre part font partie du parallélogramme articulé.

2. Véhicule cabriolet (1) selon la revendication 1, **caractérisé en ce que** les montants principaux (4) d'une part et la région centrale (5) d'autre part sont tous articulés indépendamment à la carrosserie (20) et à l'élément de toit supérieur (7).

3. Véhicule cabriolet selon l'une quelconque des revendications 1 ou 2, **caractérisé en ce que** le toit (2) est libre d'une barre de guidage disposée devant un montant principal (4).

4. Véhicule cabriolet selon l'une quelconque des revendications 1 à 3, **caractérisé en ce que** le toit (2) comprend exactement un élément de toit supérieur (7) rigide.

5. Véhicule cabriolet selon l'une quelconque des revendications 1 à 4, **caractérisé en ce que** la région centrale (5) et les montants principaux (4) sont reliés entre eux par un élément de couplage (23) synchronisant leurs mouvements de pivotement.

6. Véhicule cabriolet selon la revendication 5, **caractérisé en ce que** l'articulation (11) de la région centrale (5) à la carrosserie (20) et l'articulation de la région centrale (5) à l'élément de toit supérieur (7) sont respectivement situées au-dessus des plans des articulations (9; 10) respectives du montant principal (4).

7. Véhicule cabriolet selon la revendication 6, **caractérisé en ce que** la lunette arrière (6) est maintenue au-dessus des montants principaux (4) dans l'état ouvert.

8. Véhicule cabriolet selon l'une quelconque des revendications 1 à 7, **caractérisé en ce que** la région centrale (5) constitue, sensiblement sur toute sa hauteur, une lunette arrière (6).

9. Véhicule cabriolet (1) selon l'une quelconque des revendications 1 à 8, **caractérisé en ce qu'**un corps de plaque (13), maintenue déplaçable longitudinalement dans des guides latéraux (16; 17), est associé à l'élément de toit supérieur (7).

10. Véhicule cabriolet selon la revendication 9, **caractérisé en ce que** l'élément de toit arrière (3) comprend des guides latéraux (17) pour le corps de plaque (13), qui sont contigus à des guides (16) de l'élément de toit supérieur (7), et **en ce que** le corps de plaque (13) vient en prise, en même temps, dans des guides (16) de l'élément de toit avant (7) et dans des guides (17) de l'élément de toit arrière (3).

11. Véhicule cabriolet selon l'une quelconque des revendications 1 à 10, **caractérisé en ce que** le toit (2) est déplaçable au moins presque horizontalement entre une position fermée, dans laquelle l'élément de toit supérieur (7) est maintenu indirectement ou directement sur un cadre de pare-brise (8), et une position intermédiaire, dans laquelle la fixation entre le toit (2) et le cadre de pare-brise (8) est desserrée.

12. Toit pivotant (2), comprenant un élément de toit arrière (3) qui, dans une position montée sur une carrosserie, s'étend au moins entre une ligne de parapet de fenêtre (L) et un élément de toit (7), ce dernier étant alors disposé au-dessus d'un habitacle, et qui comprend une région centrale (5) qui est disposée entre des montants principaux latéraux (4) lorsque le toit est fermé et comprend une lunette arrière (6), le toit (2) étant déplaçable au moyen d'un parallélogramme articulé qui est associé à l'élément de toit arrière (3), et les montants principaux (4) d'une part et la région centrale (5) d'autre part faisant partie du parallélogramme articulé.
